# EUROPEAN PATENT SPECIFICATION

(11) **EP 1 086 042 B1**
(45) Date of publication and mention of the grant of the patent: **27.03.2002**
(21) Application number: 99931272.1
(22) Date of filing: 09.06.1999
(51) Int. Cl.: C01B 15/10

(54) **STABILIZED SODIUM CARBONATE PEROXYHYDRATE**
STABILISIERTES NATRIUMCARBONAT-PEROXOHYDRATE
CARBONATE-PEROXYHYDRATE DE SODIUM STABILISE

(30) Priority: 10.06.1998 DE 19826026
(43) Date of publication of application: 28.03.2001
(73) Proprietor: KEMIRA CHEMICALS OY, 00101 Helsinki (FI)
(72) Inventor: RENVALL, Ilkka, FIN-02320 Espoo (FI); SALANNE, Simo, FIN-90100 Oulu (FI); SÖDERVALL, Teemu, FIN-90560 Oulu (FI)
(74) Representative: Svensson, Johan Henrik
(86) International application number: FI9900498
(87) International publication number: WO9964351

(56) References cited:
- EP-A- 0 623 553
- DE-A- 19 544 293
- DATABASE WPI Section Ch, Week 198026 Derwent Publications Ltd., London, GB; Class M23, AN 1980-46027C XP002119451 & SU 697 285 A (AS UKR GEN INOR CHE), 15 November 1979 (1979-11-15)

## Description

The present invention relates to sodium carbonate peroxyhydrate (SCPH) particles stabilized by coating and to a process for the preparation of such coated SCPH particles. The product of the invention is particularly suitable to be used in detergents based on silicate based builders. such as zeolites.

Sodium perborate has for a long time been used as bleaching agent in detergents. The main commercial product has been sodium perhorate tetrahydrale (PB 4). The main drawback of PB 4 is that it is sparingly soluble in water. When it has become more and more common to use lower temperatures and a bleaching activator e.g. TAED, there has been a change over to the more soluble sodium perborate monohydrate (PB 1). Later sodium perborate has been launched also in automatic dishwashing detergents in place of chlorinated compounds as well as in stain salts.

Sodium perborate is a rather feasible product and it is rather stable in phosphate-free products, which have become more common especially in countries, where there is not an extended and effective sewage water treatment. The main drawback of sodium perborate may be that it contains boron. It has been claimed that boron would cause health risks. Therefore the maximum concentration of boron allowed in potable water has been restricted. There have also been claims that the limits should further be decreased. Therefore there is a need to have a boron-free bleaching agent.

Sodium carbonate peroxyhydrate (2 Na₂CO₃ ∗ 3 H₂O₂) would be a product of choice, since it does not leave any degradation products harmful for the environment. In addition it is a very water soluble compound.

Sodium carbonate peroxyhydrate (SCPH) is commonly but misleadingly called "sodium percarbonate", which gives the impression that the product would be a so-called percompound or persalt. As the formula above shows, SCPH is only a so-called addition compound, in which hydrogen peroxide is only loosely bound. It does not contain any group, which would correspond to the structure of the true percompounds, such as sodium perborate, monosodium persulphate, alkali persulphates etc. There exists a true sodium percarbonate, but it is a dangerous compound and cannot be used e.g. in household products. SCPH is not very stable probably partly due to that it is an addition compound. Due to this feature, the technological criteria for the manufacturing process are very high. Rather stable sodium carbonate peroxyhydrates can be produced by modern techniques. but still they are not stable without a coating if mixed with other ingredients in detergent mixtures. Sec e.g. the applicant's application PCT/F193/00356.

Also in household products such as e.g. automatic dishwashing detergents and stain salts, in which the properties will approach those of laundry detergents and which will contain surface active agents, enzymes, activators for hydrogen peroxide etc., it is desirable to protect SCPH for decomposition.

In household technochemical products bleaching agents are mostly used in laundry (heavy duty) detergents. It has become more and more common to use as builders different kinds of zeolites, especially zeolite 4 A instead of sodium tripolyphosphate (STPP). It has not been possible to use SCPH as such in zeolite containing detergents, since the product will decompose very rapidly in contact with zeolites. The reason for this effect is not accurately known. It has to be noticed that zeolites contain in general a considerable amount of water, e.g. zeolite 4 A contains normally about 20% water. In order to obtain an impression of environmental friendliness, there has been an increased use of zeolites and also other silicates instead of phosphates. At the same time there has been a trend for replacing sodium perborate with sodium carbonate peroxyhydrate. Due to the instability of SCPH problems have emerged. To solve the problems a lot of different stabilization methods have been developed,

One group of stabilization methods comprises the use of organic compounds either of monomeric or polymeric compounds. They may stabilize SCPH a little, but the organic compounds can quite easily react with SCPH or hydrogen peroxide formed when the peroxyhydrate adsorbs moisture or dissolves in water. The salts of simple polycarboxylic acids such as e.g. sodium citrate are not very effective chelators for transition metal ions and the transition metal chelates can also act as a decomposition catalyst both for sodium carbonate peroxyhydrate and hydrogen peroxide. The polymers of smaller molecular weight suffer from the reactivity with the bleaching agent or hydrogen peroxide, while the higher molecular weight compounds can additionally increase the dissolution time of the final coated product.

A considerable number of inventions deals with coatings containing boric acids or boron containing compounds, such as alkali orto- and metaborates with or without additives such as e.g. alkali silicates. All these methods suffer from the drawback that though the stability can be quite good. they still contain boron. In many cases also the solubility of the final product can be decreased when using boron containing materials, which is not necessarily a desirable property for the final product.

In order to avoid the aforesaid drawbacks the goal has been to develop coatings. which firstly, do not contain organic compounds, not at least such that can react with SCPH or alkaline hydrogen peroxide in the presence or absence of transition metal ions and secondly, coatings that do not contain boron compounds.

According to US patent 4,325,933 (Kao Soap Co., Ltd.) magnesium sulphate can be used for coating, but magnesium sulphate alone does not give enough stability. EP 0 623 553 (Mitsubishi Gas Chemical) discloses a product, in which the coating has been obtained by a layer containing magnesium sulphate, sodium silicate and additionally an alkali metal salt selected from the group consisting of alkali metal carbonates, alkali metal bicarbonates and alkali metal sulphates. The production of such a coating suffers from the drawback that three different coating chemicals have to be used. Additionally sodium silicate, at least when it is used in bigger amounts can increase the caking tendency, which in turn will decrease the productivity of the coating process when a fluidized bed dryer is used as the coating equipment.

A coating according to GB 1,466,799 (Interox) using only soda ash or sodium sulphate alone has already been known for long time. But according to the document each of these compounds will give lower stability than a mixture of them.

Since it is known that sodium sulphate, sodium carbonate and sodium chloride can form together an addition product with hydrogen peroxide, there are inventions, EP 0 592 969 and EP 0 624 549 (Solvay Interox GmbH) based on the use of sodium sulphate and sodium chloride as the coating material. Chloride ions arc disadvantageous in a washing process, since the chloride ions can cause corrosion in stainless steel used as construction material for washing machines. In addition chlorinated compounds may he generated, when a bleaching agent based on hydrogen peroxide and a bleaching activator is used in order to generate a bleaching agent with higher oxidation potential than hydrogen peroxide. An example of this kind of a bleaching agent is peroxyacetic acid, which is generated from hydrogen peroxide based bleaching agents and from tetraacetylethylenediamine (TAED).

The applicant has developed a method according to WO 95/15291, which uses sodium sulphate and where the granules formed in a fluidized bed equipment arc coated in a fluidized bed using a carbon dioxide containing atmosphere, when feeding the sodium sulphate solution into the fluidized bed dryer.

Later it has been claimed that sodium sulphate alone would be advantageous according to WO 97/19890 (Degussa A.G.) when the sodium carbonate peroxyhydrate is produced by fluidized bed granulation and when the coating with sodium sulphate is carried out in a fluidized bed dryer.

The products produced by the two methods mentioned above can reach an acceptable stability for most of the present common laundry detergents. Since the raw materials and processes for making different kinds of detergents are changing at a fast rate, there are needs for good coatings which could be used in a changing environment and which would perform also equally well in the present systems.

Now it has surprisingly been found that certain mixtures of sodium sulphate and lithium sulphate can give a coating for sodium carbonate peroxyhydrate, which renders the product very stable in contact with zeolite 4 A. Of course this product can also be used in products containing such kinds of zeolites and silicates, which do not decompose sodium carbonate peroxyhydrate as fast as zeolite 4 A, e.g. such as zeolite 24 A (Crosfield group), zeolite P (Degussa A.G.). layered silicates (Hoechst A.G.) etc. and other builders, such as phosphates.

Thus, in one aspect of the invention there is provided coated sodium carbonate peroxyhydrate particles comprising a core of sodium carbonate peroxyhydrate and a coating layer comprising a mixture of lithium sulphate and sodium sulphate.

Suitably the molar ratio of lithium sulphate to sodium sulphate in the coating layer is in the range of 2:1 to 0.55:1 corresponding to a weight ratio of about 1.55:1 to 0.43:1. Said molar ratio is preferably in the range of 1.5:1 to 0.67:1 corresponding to a weight ratio of about 1.12:1 to 0.52:1.

According to a preferred embodiment of the invention the molar ratio of lithium sulphate to sodium sulphate is about 1:1 (corresponding to a weight ratio of about 0.77:1) as will be explained in further detail below. In this case lithium sulphate and sodium sulphate are preferably in the form of an anhydrous double salt.

Suitably the amount of the coating layer is from 5 to 20% by weight, preferably from 7 to 15% by weight, based on the weight of the uncoated sodium carbonate peroxyhydrate particles. An especially preferred amount of the coating layer is about 10% by weight.

Suitably the moisture content of the coated SCPH particles is below 0.5% by weight, preferably below 0.3% by weight.

Both sodium sulphate and lithium sulphate can form compounds containing water of crystallization, a decahydrate resp. a monohydrate. It has been found that an equimolar mixture of sodium sulphate and lithium sulphate (56.4 wt% of sodium sulphate) can form a compound, a double salt without water of crystallization (The X-ray diffraction spectrum was interpreted with the help of the manual: PW 1876 PC-Identify; Philips Electronics N.V.). It has been found surprisingly that at this point or near this point a maximum stability against zeolite can be obtained. The reason for this feature is not known, but it may be connected with the formation of the waterless double salt. It has to be noticed that if equivalent amounts of lithium and sodium sulphate were separately applied in the same amounts as when using the aforesaid mixture in making the coating. a good stability could not be achieved as can be seen from the coating experiment below.

In an other aspect of the invention there is provided a process for the preparation of coated sodium carbonate peroxyhydrate particles as defined above comprising applying an aqueous solution of lithium sulphate and sodium sulphate to particles of sodium carbonate peroxyhydrate followed by drying to obtain a coating layer comprising a mixture of lithium sulphate and sodium sulphate on said particles.

The coating operation can be made by any known coating method, e.g. by high-efficiency mixing. The preferable method, however, is fluidized bed coating. since the drying can be made in the same equipment. These kinds of coating processes are well suited, especially when the granulation of SCPH has been carried ut by a fluidized bed granulation process.

Thus, the coating can be applied in a fluidized bed dryer on granules made by fluidized bed granulation. The coating can equally well be applied on other kinds of granules made by e.g. matrix extrusion, roller compaction and mixer, tumbler or drum granulation.

It is very important to keep the moisture content at least below 0.5% of the coated SCPH-product (expressed as loosely bound water), preferably below 0.3% water in order to guarantee a good stability against silicate containing detergent builders. The time required to obtain this moisture content depends on the size of granules to be coated. The extra drying time after the coating at 50-60 °C will be 4-30 minutes, preferably 5-10 minutes, when the target end product has the average granule size of 0.7-0.8 mm. For bigger particle sizes a longer time up to 60 minutes, preferably between 5 and 30 minutes is required.

The coated sodium carbonate peroxyhydrate particles of the invention can be used in detergents, cleaning agents or other bleaching or disinfecting products, in particular in detergents containing silicate builders. such as zeolites.

The use of the new coated product of the invention is not restricted only to laundry detergents, but it can be used e.g. in automatic dishwashing detergents, stain salts and products where sodium carbonate peroxyhydrate is used alone or together with a bleaching activator to give the product a bleaching or disinfecting property.

The present invention will now be described in detail by reference to the following coating experiments.

### Coating experiments

The coating experiments were carried out in Aeromatic Strea 1 equipment. About 400 g unsieved SCPH granules made by fluid bed granulation were used as the material to he coated. The original active oxygen content of the granules was 13.7%. The granular SCPH had an apparent density of about 1.1 kg/l. The SCPH granules used for coating trials were from the same production lot in order to avoid the ambiguity due to the different SCPH qualities. Solutions of sodium sulphate or lithium sulphate or a mixture of them were prepared so that the solution was almost saturated. The coating layer consisted 10 wt.% of the SCPH. Also experiments where sodium sulphate and lithium sulphate were applied separately in chosen order to obtain the same amount of coating were carried out. The temperature of the solutions was about 60 °C and the fluidized bed was kept at the temperature of 50-55 °C. This guaranteed a smooth operation and a good quality of the products. The fluidization was continued after coating for from 0 minutes up to 30 minutes in order to keep the moisture content below 0.5%.

In detergent industry it is very common to close the products in sealed cardboard boxes for testing the stability of products containing bleaching agents. Then the packages are put in a climate chamber at temperature and relative humidity of 30-40 °C resp. 70-80%. This system is very time consuming, since water vapor will not very easily penetrate the walls of packages and since the water vapor inside the packages will mainly depend on the water content of the enclosed product. The method will not give any information on what is happening when the package has been opened and left in the warm and humid conditions. Another method is to put the sample in a device (vessel, tub), which is covered with a semipermeable membrane or with plastic foil which contains minute pinholes. This method will not always give reliable results, since the oxygen generated by the decomposition of sodium carbonate peroxyhydrate will inhibit or slow down the diffusion of water vapor from the surrounding atmosphere.

The applicant has used a method which has worked well in the applicant's tests and by which quite reliable results can be obtained after 1-2 weeks. In order to get even more reliable results, a testing time of 4 weeks is enough. Since the common household detergents contain 20-30% zeolite or sometimes a little more, the applicant has used in the tests a method, where the SCPH sample and zeolite 4 A are mixed in a weight ratio of 50:50. The total sample weight is about 5 grams. The samples are tested under temperature of 30 °C and 70% relative humidity in open flat bottomed glass vessels. It is obvious that this kind of testing method is very rigorous.

The content of active oxygen was determined by titration with a potassium permanganate solution. The decomposition was calculated from the decrease of the amount of active oxygen and the changes in weights of the samples.

The test results after 4 weeks are shown in Table 1.

**Table 1**

| Samples and testing results | | | | |
|---|---|---|---|---|
| Test no. | SCPH/coating wt.% | Li₂SO₄/ Na₂SO₄ wt.ratio of total coating | Decomposition, % after 4 weeks | Remarks |
| 1 | 90:10 | 0:10 | 28.1 | |
| 2 | 90:10 | 0.9:9.1 | 31.8 | |
| 3 | 90:10 | 2.7:7.3 | 33.8 | |
| 4 | 90:10 | 4.4:5.6 | 17.2 | |
| 5 | 90:10 | 4.6:5.4 | 19.5 | |
| 6 | 90:10 | 6.6:3.4 | 29.9 | |
| 7 | 90:10 | 7.7:2.3 | 31.0 | |
| 8 | 90:10 | 10:0 | 40.8 | |
| 9 | 90:10 | 4.6:5.4 | 51.0 | Li+ Na sulphate separately |
| 10 | 90:10 | 4:6:5.4 | 42.9 | Na+ Li sulphate separately |

The above test results clearly show that the best stability against decomposition in the presence of zeolite 4 A under the severe testing conditions were obtained when mixtures of equimolar or near equimolar amounts of lithium sulphate and sodium sulphate were used (tests 4 and 5). If equimolar amounts of lithium sulphate and sodium sulphate were separately applied a good stability was not achieved (tests 9 and 10).

## Claims

1. Coated sodium carbonate peroxyhydrate particles comprising a core of sodium carbonate peroxyhydrate and a coating layer comprising a mixture of lithium sulphate and sodium sulphate.

2. Coated sodium carbonate peroxyhydrate particles according to claim 1. **characterized in that** the molar ratio of lithium sulphate to sodium sulphate in the coating layer is in the range of 2:1 to 0.5:1, preferably 1.55:1 to 0.67:1.

3. Coated sodium carbonate peroxyhydrate particles according to claim 2, **characterized in that** lithium sulphate and sodium sulphate are present in substantially equimolar amounts.

4. Coated sodium carbonate peroxyhydrate particles according to claim 3, **characterized in that** litium sulphate and sodium sulphate are in the form of an anhydrous double salt.

5. Coated sodium carbonate peroxyhydrate particles according to any of claims 1 to 4, **characterized in that** the amount of the coating layer is from 5 to 20% by weight, preferably from 7 to 15% by weight, based on the weight of the uncoated sodium carbonate peroxyhydrate particles.

6. Coated sodium carbonate peroxyhydrate particles according to any of the preceeding claims, **characterized in that** the moisture content of said coated particles is below 0.5% by weight, preferably below 0.3% by weight.

7. Use of coated sodium carbonate peroxyhydrate particles according to any of claims 1 to 6 in detergents, cleaning agents or other bleaching or disinfecting products, in particular in detergents containing silicate builders, such as zeolites.

8. Process for the preparation of coated sodium carbonate peroxyhydrate particles according to any of claims 1 to 6, **characterized in that** an aqueous solution of lithium sulphate and sodium sulphate is applied to particles of sodium carbonate peroxyhydrate followed by drying to obtain a coating layer comprising a mixture of lithium sulphate and sodium sulphate on said particles.

9. Process according to claim 8, **characterized in that** the aqueous solution of lithium sulphate and sodium sulphate is sprayed onto said particles of sodium carbonate peroxyhydrate in a fluidized bed.

10. Process according to claim 9, **characterized in that** the process is carried out under such conditions that the moisture content of the coated particles is below 0.5% by weight.

11. Process according to claim 9 or 10, **characterized in that** said particles of sodium carbonate peroxyhydrate are granules made by fluidized bed granulation.

## Patentansprüche

1. Beschichtete Natriumcarbonatperoxohydratteilchen, umfassend aus einem Kern aus Natriumcarbonatperoxohydrat und einer Beschichtungsschicht, umfassend ein Gemisch aus Lithiumsulfat und Natriumsulfat.

2. Beschichtete Natriumcarbonatperoxohydratteilchen nach Anspruch 1, **dadurch gekennzeichnet, dass** das molare Verhältnis von Lithiumsulfat zu Natriumsulfat in der Beschichtungsschicht im Bereich von 2 : 1 bis 0,5 : 1, vorzugsweise 1,55 : 1 bis 0,67 : 1 liegt.

3. Beschichtete Natriumcarbonatperoxohydratteilchen nach Anspruch 2, **dadurch gekennzeichnet, dass** Lithiumsulfat und Natriumsulfat in im wesentlichen äquimolaren Mengen vorliegen.

4. Beschichtete Natriumcarbonatperoxohydratteilchen nach einem der vorhergehende Ansprüche, **dadurch gekennzeichnet, dass** Lithiumsulfat und Natriumsulfat in Form eines wasserfreien Doppelsalzes vorliegen.

5. Beschichtete Natriumcarbonatperoxohydratteilchen nach einem der vorhergehenden Ansprüche, **dadurch gekennzeichnet, dass** die Menge der Beschichtungsschicht zwischen 5 und 20 Gew.-%, vorzugsweise von 7 bis 15 Gew.-% bezogen auf das Gewicht der unbeschichteten Natriumcarbonatperoxohydratteilchen beträgt.

6. Beschichtete Natriumcarbonatperoxohydratteilchen nach einem der vorhergehenden Ansprüche, **dadurch gekennzeichnet, dass** der Feuchtigkeitsgehalt der beschichteten Teilchen unter 0,5 Gew.-%, vorzugsweise unter 0,3 Gew.-% liegt.

7. Verwendung von beschichteten Natriumcarbonatperoxohydratteilchen nach einem der Ansprüche 1 bis 6 in Waschmitteln, Reinigungsmitteln oder anderen bleichenden oder desinfizierenden Produkten, insbesondere in Waschmitteln, die Silikatbuilder, wie z.B. Zeolithe, enthalten.

8. Verfahren zur Herstellung von beschichteten Natriumcarbonatperoxohydratteilchen nach einem der Ansprüche 1 bis 6, **dadurch gekennzeichnet, dass** eine wässrige Lösung von Lithiumsulfat und Natriumsulfat auf Natriumcarbonatperoxohydratteilchen aufgetragen wird, gefolgt von einer Trocknung, um eine Beschichtungsschicht zu erhalten, die ein Gemisch aus Lithiumsulfat und Natriumsulfat auf diesen Teilchen umfasst.

9. Verfahren nach Anspruch 8, **dadurch gekennzeichnet, dass** die wässrige Lösung von Lithiumsulfat und Natriumsulfat auf die Natriumcarbonatperoxohydratteilchen in einem Wirbelverfahren gesprüht wird.

10. Verfahren nach Anspruch 9, **dadurch gekennzeichnet, dass** das Verfahren unter solchen Bedingungen durchgeführt wird, dass der Feuchtigkeitsgehalt der beschichteten Teilchen unter 0,5 Gew.-% liegt.

11. Verfahren nach Anspruch 9 oder 10, **dadurch gekennzeichnet, dass** die Natriumcarbonatperoxohydratteilchen durch Wirbelbettgranulierung hergestellte Teilchen sind.

## Revendications

1. Particules de carbonate-peroxyhydrate de sodium revêtues, comprenant un noyau de carbonate-peroxyhydrate de sodium et une couche de revêtement comprenant un mélange de sulfate de lithium et de sulfate de sodium.

2. Particules de carbonate-peroxyhydrate de sodium revêtues selon la revendication 1, **caractérisées par le fait que** le rapport molaire entre le sulfate de lithium et le sulfate de sodium dans la couche de revêtement est de l'ordre de 2 : 1 à 0,5 : 1, de préférence de 1,55 : 1 à 0,67 : 1.

3. Particules de carbonate-peroxyhydrate de sodium revêtues selon la revendication 2, **caractérisées par le fait que** le sulfate de lithium et le sulfate de sodium sont présents en des quantités sensiblement équimolaires.

4. Particules de carbonate-peroxyhydrate de sodium revêtues selon la revendication 3, **caractérisées par le fait que** le sulfate de lithium et le sulfate de sodium se présentent sous forme d'un sel double anhydre.

5. Particules de carbonate-peroxyhydrate de sodium revêtues selon l'une quelconque des revendications 1 à 4, **caractérisées par le fait que** la quantité de la couche de revêtement est de 5 à 20 % en poids, de préférence de 7 à 15 % en poids, sur base du poids des particules de carbonate-peroxyhydrate de sodium non revêtues.

6. Particules de carbonate-peroxyhydrate de sodium revêtues selon l'une quelconque des revendications précédentes, **caractérisé par le fait que** la teneur en humidité desdites particules revêtues est inférieure à 0,5 % en poids, de préférence inférieure à 0,3 % en poids.

7. Utilisation des particules de carbonate-peroxyhydrate de sodium revêtues selon l'une quelconque des revendications précédentes dans des détergents contenant des formateurs de silicate, tels que des zéolites.

8. Procédé de préparation de particules de carbonate-peroxyhydrate de sodium revêtues selon l'une quelconque des revendications 1 à 6, **caractérisé par le fait qu'**une solution aqueuse de sulfate de lithium et de sulfate de sodium est appliquée sur des particules de carbonate-peroxyhydrate de sodium, suivi de séchage, pour obtenir une couche de revêtement comprenant un mélange de sulfate de lithium et de sulfate de sodium sur lesdites particules.

9. Procédé selon la revendication 8, **caractérisé par le fait que** la solution aqueuse de sulfate de lithium et de sulfate de sodium est pulvérisée sur lesdites particules de carbonate-peroxyhydrate de sodium dans un lit fluidisé.

10. Procédé selon la revendication 9, **caractérisé par le fait que** le procédé est réalisé dans des conditions telles que la teneur en humidité des particules revêtues est inférieure à 0,5 % en poids.

11. Procédé selon la revendication 9 ou 10, **caractérisé par le fait que** lesdites particules de carbonate-peroxyhydrate de sodium sont des granulés réalisés par granulation à lit fluidisé.
